# EUROPEAN PATENT SPECIFICATION

(11) **EP 2 847 989 B1**
(45) Date of publication and mention of the grant of the patent: **12.04.2017**
(21) Application number: 13731903.4
(22) Date of filing: 09.05.2013
(51) Int. Cl.: H04M 15/00, H04W 4/24

(54) **WI-FI HOT-SPOT NETWORKING ECOMMERCE**
ELEKTRONISCHER HANDEL ÜBER WI-FI-HOTSPOT-VERNETZUNG
COMMERCE ÉLECTRONIQUE À RÉSEAUTAGE DE POINTS D'ACCÈS SANS FIL WI-FI

(30) Priority: 10.05.2012 US 201213468340
(43) Date of publication of application: 18.03.2015
(73) Proprietor: Telefonaktiebolaget LM Ericsson (publ), 164 83 Stockholm (SE)
(72) Inventor: WANG, Jinhui, Québec H9H 4W8 (CA)
(74) Representative: Röthinger, Rainer
(86) International application number: PCT/IB2013/053774
(87) International publication number: WO 2013/168124

(56) References cited:
- US-A1- 2001 043 613
- US-A1- 2004 053 599
- US-A1- 2006 030 293
- US-A1- 2008 059 315
- US-A1- 2008 195 498
- US-A1- 2010 192 212
- US-A1- 2010 290 442
- CATHERINE A MIDDLETON ET AL: "An exploration of user-generated wireless broadband infrastructures in digital cities", TELEMATICS AND INFORMATICS, PERGAMON PRESS, OXFORD, GB, vol. 28, no. 3, 19 August 2010 (2010-08-19), pages 163-175, XP028177822, ISSN: 0736-5853, DOI: 10.1016/J.TELE.2010.08.003 [retrieved on 2010-09-03]
- PAN HUI ET AL: "Sharing airtime with Shair avoids wasting time and money", MOBILE COMPUTING SYSTEMS AND APPLICATIONS; 20090223 - 20090224, 23 February 2009 (2009-02-23), pages 1-6, XP058033218, DOI: 10.1145/1514411.1514417 ISBN: 978-1-60558-283-2
- EFSTRATIOS G DIMOPOULOS ET AL: "Exploiting super peers for large-scale peer-to-peer Wi-Fi roaming", GLOBECOM WORKSHOPS (GC WKSHPS), 2010 IEEE, IEEE, PISCATAWAY, NJ, USA, 6 December 2010 (2010-12-06), pages 1990-1994, XP031859187, ISBN: 978-1-4244-8863-6

## Description

### TECHINICAL FIELD

A method and system relating to hotspots in a communication network and in particular to a method and system in which a subscriber's user equipment is used to provide a communication network hotspot to other users.

### BACKGROUND

Geographical coverage of communication networks is increasing rapidly. For example, many airports provide wireless connection to the Internet via one or more gateway devices. An area where wireless connection to the Internet or to another network is provided is sometimes called a wireless hotspot. Wireless hotspots typically support the IEEE 802.11family of wireless communication standards. Typically, a provider of a wireless hotspot may charge a fee for access. These fees may be relatively expensive. Further, many areas have no wireless hotspot coverage at all, even though these areas may provide access to a wireless telecommunications network such as via a cellular, e.g., long term evolution ("LTE"), communication network. Also, where wired access to the network is provided, a user may not be able to connect directly to the wired network.

Although many public areas are without wireless access to the Internet, there may be many subscribers to wired or wireless access to the Internet in any given area. Many of these subscribers have unused resources that they pay for. For example, a subscriber may pay for Internet access through their wireless communication carrier or cable modem service provider that is limited to a download volume per month that they routinely do not exceed, e.g., 3 GBytes. For example, the subscriber may only actually use 500 Mbytes per month. Such excess resources currently are wasted.

It is desirable to have a way to make use of the excess and unused bandwidth in a manner that can provide additional access to the communication network for other users.

2004/053599 [US] Karaoguz *et al*., describes an access point providing wireless access to a plurality of devices. 2010/290442 [US] Souissi *et al*., describes a modem in a wide area network. 2010/192212 [US] Raleigh describes storing device credentials. 2008/195498 [US] Crawford *et al*., describes a point of sale device. 2006/030293 [US] Karaoguz *et al*., and 2008/059315 [US] Karaoguz *et al*., describe an access point providing wireless communications to a plurality of devices. US 2001/0043613 A1 relates to a system and method for resource allocation in a broadband telecommunications network operating under Combined Free-Demand Assignment Multiple Access. Therein, data-slot credits for each terminal are accumulated, once all Constant Rate Allocation (CRA) and Rate-based Dynamic Capacity (RBDC) bandwidth reservations have been satisfied. These credits represent the prioritized segment of the terminal's Volume-based Dynamic Capacity (VBDC) bandwidth request and are used by a resource allocation server within the base station of the network to prioritize the VBDC allotment of data slots to that terminal.

EP 2 807 839 A0, which may at the most qualify as prior art under Article 54(3) EPC and refers to the application published as WO 2013/112652 A1, relates to a method including broadcasting, from a first mobile device, a message having an identity of the first mobile device and conditions for connecting to a network through the first mobile device; and receiving, at the first mobile device, a request from one or more second mobile devices that includes second user identifiers corresponding to respective second users of the one or more second mobile devices. The second user identifiers correspond to respective user accounts of one or more second users in a social-networking system. The method also includes determining, at the first mobile device, whether the one or more second mobile devices are authorized to access the network through the first mobile device and, if the one or more second devices are authorized to access the network, then configuring the first mobile device to provide the second mobile device network access.

### SUMMARY

Methods and systems for using a subscriber device as a hotspot service provider are disclosed. According to one aspect, a method for using a first device as a hotspot service provider according to claim 1 is proposed. The method inter alia includes performing a first registration of the first device as a first hotspot service provider. The first registration includes identifying an account of an owner of the first device. A second registration of a second device, in a coverage area of the first device, as a hotspot service consumer is also performed. The second registration includes identifying an account of an owner of the second device. A first amount is charged against an account of the owner of the second device based on a resource usage by the second device via the first device. At least a portion of the first amount is credited to the account of the owner of the first device.

According to this aspect, in one embodiment, the method further includes transmitting to the second device by way of the first device a webpage to enable a user of the second device to logon to access a provided service. In one embodiment, the first amount based on the resource usage is a flat fee associated with access to a provided service by way of the first device. In one embodiment, the first amount based on the resource usage is a fee based on an amount of data transferred to the second device by way of the first device. In one embodiment, charging a first amount includes deducting the first amount from the account of the owner of the second device. In one embodiment, the first amount based on the resource usage is a fee based on an amount of time of access to a provided service by the second device by way of the first device. According to another embodiment, the method further includes performing a third registration of a third device as a second hotspot service provider. The third registration identifies an account of an owner of the third device. When the second mobile device exits the coverage area of the first device and enters a coverage area of the third device, crediting the account of the owner of the first device ceases and crediting at least a portion of the first amount to the account of the owner of the third device commences. According to this embodiment, the method further includes signaling the third device to act as a wireless hotspot service provider to the second device. In another embodiment, the first registration of the first device includes identifying an amount of resources to be provided to a hotspot service consumer by the first device.

According to another aspect, a hotspot management computing device according to claim 6 is provided. The device includes a memory and a processor. The memory is configured to store first account information concerning a first subscriber and second account information of a second subscriber, where the first subscriber is associated with a first device capable of functioning as a hotspot service provider and the second subscriber is associated with a second device capable of functioning as a hotspot service consumer. The processor is inter alia configured to perform registration of the first and second subscriber. The processor also charges a first amount from the second account of the second subscriber. The amount is based on resource usage of a first set of resources by the second subscriber. The processor also credits at least a portion of the amount to a first account of the first subscriber.

According to this aspect, in one embodiment, the processor is further configured to monitor usage of the first set of resources and to calculate the first amount. In one embodiment, the processor is further configured to select the first subscriber from the plurality of subscribers in a coverage area of the second device. In one embodiment, when the second subscriber moves from a first cell to a second cell, the processor ceases crediting the first account of the first subscriber and commences crediting at least a portion of the first amount to a third account of a third subscriber having a third device. The third device is arranged to function as a hotspot service provider in the first cell. In some embodiments, the processor is further configured to determine the amount of data transferred to the second device by way of the first device. In one embodiment, the processor is further configured to determine an amount of resources to be accessible by the second device via the first device. In one embodiment, the processor is further configured to provide notice to the first subscriber when the amount of accessible resources of the first device is exhausted by the second device. In another embodiment, the processor is further configured to determine an amount of resources of the first device allocable to other devices based on a number of devices seeking access to a service. In another embodiment, the processor is further configured to deliver an advertisement to the second device via the first device. In one embodiment, the processor is further configured to credit an amount to the first account of the first subscriber based on a fee collected from a sponsor of the advertisement. In one embodiment, the processor is further configured to offset the first amount based on a fee for delivery of an advertisement to the second device. In another embodiment, the processor is further configured to facilitate at least one of file sharing and text messaging between the first device and the second device.
According to another aspect, a first device configurable to provide a hotspot service according to claim 13 is provided. The first device includes a memory configured to record an amount of resources allocable to a second device. A processor of the first device is inter alia configured to authorize the second device to receive access to a first server via the first device, the authorizing based on information received from a managing computing device.

According to this aspect, in one embodiment, the memory records an amount of resources allocable to the second device, and the first device comprises a display. The display is arranged to indicate the amount of resources allocable to the second device. In one embodiment, the processor is further configured to determine the amount of resources of the first device being used by the second device. The first device further includes a display, the display being arranged to indicate the amount of resources of the first device being used by the second device. In one embodiment, the amount of resources is expressed as one of a number of bits per second and a data volume.

### BRIEF DESCRIPTION OF THE DRAWINGS

A more complete understanding of the present invention, and the attendant advantages and features thereof, will be more readily understood by reference to the following detailed description when considered in conjunction with the accompanying drawings wherein:
FIG. 1 is a block diagram of an exemplary communication system constructed in accordance with principles of the present invention;
FIG. 2 is a block diagram of an exemplary hotspot manager for management of hotspots constructed in accordance with the present invention;
FIG. 3 is a flowchart of an exemplary process for using a device as a wireless hotspot service provider in accordance with principles of the present invention;
FIG. 4 is a flowchart of an exemplary process for transferring hotspot functionality from a first subscriber in a first coverage area to a third subscriber in a second coverage area;
FIG. 5 is a flowchart of an exemplary process for transferring hotspot functionality from a first subscriber in a first coverage area to a fourth subscriber in the first coverage area; and
FIG. 6 is a flowchart of an exemplary process for providing advertising from a hotspot manager to a subscriber.

### DETAILED DESCRIPTION OF THE INVENTION

Before describing in detail exemplary embodiments that are in accordance with the present invention, it is noted that the embodiments reside primarily in combinations of apparatus components and processing steps related to the provision of hotspots in a communication network. Accordingly, the system and method components have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

As used herein, relational terms, such as "first" and "second," "top" and "bottom," and the like, may be used solely to distinguish one entity or element from another entity or element without necessarily requiring or implying any physical or logical relationship or order between such entities or elements

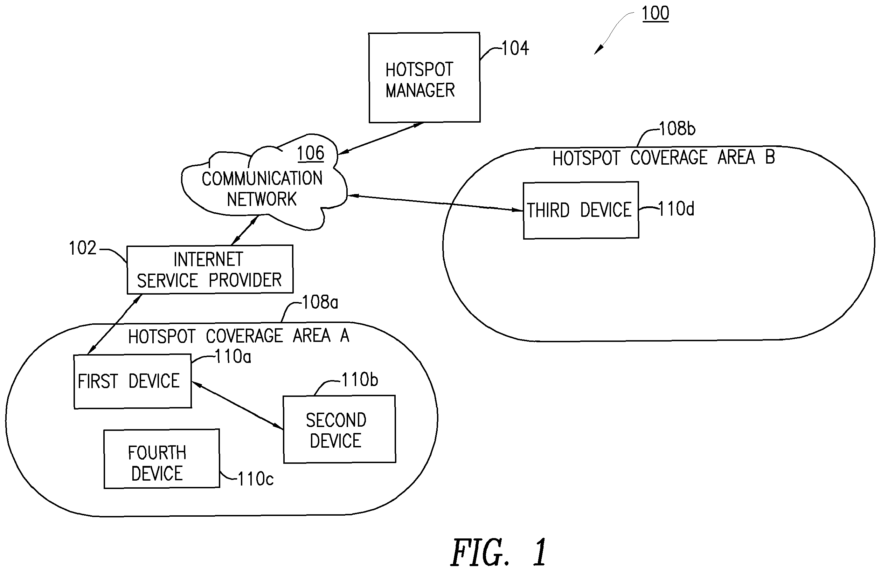

Referring now to the drawing figures, in which like reference designators denote like elements, there is shown in FIG. 1 an exemplary communication system 100 having an Internet service provider 102, a hotspot manager 104, a communication network 106, a first hotspot coverage area 108a and a second hotspot coverage area 108b. The hotspot coverage areas are referred to herein collectively as coverage areas 108. In each coverage area 108, there may be a plurality of devices such as a first device 110a, a second device 110b and a fourth device 110c in the coverage area 108a and a third device 110d in the coverage 108b, referred to collectively herein as devices 110.

Devices 110 may be in communication with the communication network 106 via a wired or wireless connection. For example, a device 110 may be a desktop personal computer that is connected to the communication network 106 via a wired Ethernet connection, but may also include a wireless network device, e.g., personal computer wireless card, that can wirelessly communicate with other devices 110 that are within the wireless coverage area of the desktop PC. One, some or all of the devices 110 may be mobile wireless devices, e.g., wireless routers, tablets, cell phones, laptop computers, and the like. The coverage area may be defined as the range of an antenna of a wireless device designated to be a wireless hotspot service provider.

The Internet service provider 102 provides Internet Access to a device 110 via the communication network 106. In particular, the Internet service provider 102 provides Internet access to the second device 110b via the first device 110a. The hotspot manager 104 manages the use of devices 110 as hotspot service providers and as hotspot service consumers. Although the invention is discussed herein in the context of providing access to the Internet, access to other networks, such as a local area network or a wide area network, is contemplated. Note that the Internet service provider 102 may provide Internet service or connection to any other local or wide area network.

In the configuration of FIG. 1, the second device 110b has access to the Internet via the first device 110a. This access may be obtained by a user of the second device 110b by interacting with a browser web page downloaded from the hotspot manager 104 via the first device 110a, or by interacting with an application interface whose contents are downloaded from the hotspot manager 104. The webpage or application interface may gather certain information from the user of the second device 110b such as a user name and a password. This information, along with a subscriber identity number, may be passed onto the hotspot manager 104 via the first device 110a.

The hotspot manager 104 may register the devices 110 as one of a hotspot service provider and a hotspot service consumer. In the example of FIG. 1, the first device 110a is registered as a hotspot service provider and the second device 110b is registered as a hotspot service consumer. Registration includes identifying an account of an owner of each device. The identification of an account may include creation of a new account or identification of a preexisting account.

The access obtained by the device 110b via the device 110a consumes resources of the device 110a. Thus, the hotspot manager 104 may initially allocate a given amount of resources of the device 110a to provision of Internet access to other devices in coverage area 108a. This allocation may change during the provision of Internet access, depending on, for example, a number of devices seeking Internet access in the coverage area 108a. The allocation of resources may be specified as channels, bandwidth, data volume, access time, etc.

The hotspot manager 104 may monitor the use of resources of the first device 110a by the second device 110b and charge an account of the owner of the second device 110b based on an amount of used resources. The amount charged may be a flat fee for a given amount of resources, a fee based on an amount of data transferred to the second device 110b via the first device 110a, a fee based on an amount of time of access to the provided service, or other fee arrangement. Further, the amount charged may be deducted from the account of the second device owner. The particular fee arrangement may be based on a subscriber agreement between the first device owner and the Internet service provider 102, between the first device owner and the hotspot manager, between the second device owner and the Internet service provider, or between the second device owner and the hotspot manager 104. The fee may be based on an amount of advertisements provided by the hotspot manager. For example, a first fee may be charged to receive no advertisements and a second fee may be charged to receive access with advertisements.

The hotspot manager 104 may credit an account of the first device owner at least a portion of the amount charged to the account of the second device owner. The percent of the amount charged to the account of the second device owner that is credited to the account of the first device owner may be pre-determined according to an agreement between the first device owner and one of the Internet service provider 102 and the hotspot manager 104. In some alternative examples, the amount charged and/or the amount credited may be according to the terms of an agreement between the Internet service provider 102 and the hotspot manager 104.

When the second device 110b moves out of the coverage area 108a and into the coverage area 108b, the hotspot manager 104 may detect this change and begin a session of Internet access provided to the second device 110b via the third device 110d acting as a hotspot service provider of the coverage area 108b. Thus, the hotspot manager 104 may have registered the third device 110d, including identifying an account of the owner of the third device 110d. When the second device 110b moves from the first coverage area 108a to the second coverage area 108b, the hotspot manager 104 ceases crediting the account of the first device owner and commences crediting the account of the third device owner.

If, while the second device 110b is receiving access in the first coverage area 108a via the first device 110a, and the first device 110a leaves the first coverage area 108a, the hotspot manager detects this change and begins a session of Internet access provided to the second device 110b via the fourth device 110c acting as a second hotspot service provider in the first coverage area 108a. When the first device 110a moves away from the second device 110b such that the second device 110b is no longer in the first coverage area 108a, the hotspot manager 104 ceases crediting the account of the first device owner and commences crediting the account of the fourth device owner whose device coverage area partially or substantially overlaps the first coverage area and encompasses the second device 110b.

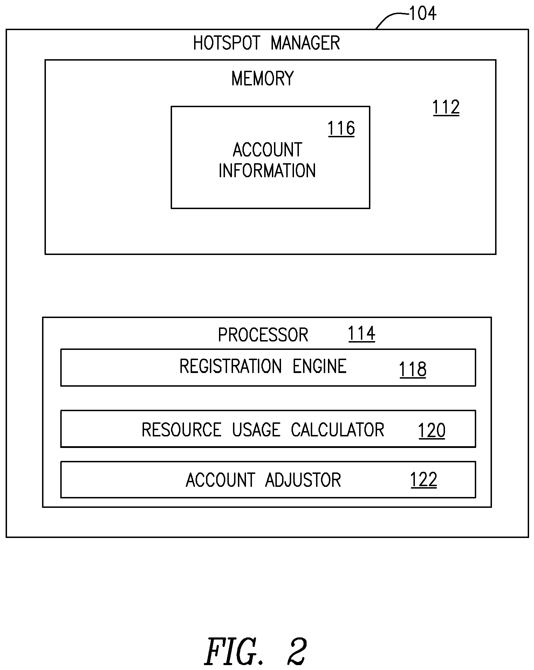

FIG. 2 is a block diagram of an exemplary hotspot manager 104 for management of hotspots constructed in accordance with the present invention. The hotspot manager 104 has a memory 112 and a processor 114. The memory 112 includes account information 116. The account information 116 may include account information of at least one device that may function as a hotspot service provider and at least one device that may function as a hotspot service consumer. The account information may include an identity of a subscriber, a current amount in the subscriber's account, and an amount of resources allocable from the subscriber. The account information may also include information concerning the terms of an agreement between a subscriber and the hotspot manager 104, or between a subscriber and the Internet service provider 102. The hotspot manager 104 may also include components such as a display unit, input devices, and the like. It is contemplated that the memory may include non-volatile memory such as a hard drive, flash memory, etc. in addition to volatile memory.

The processor 114 is programmed or configured to perform the functions of a registration engine 118, a resource usage calculator 120, and an account adjustor 122. The registration engine 118 performs a registration process to register a device as a hotspot service provider or as a hotspot service consumer. The registration engine 118 may further select which one or more of a plurality of devices 110 is to serve as a hotspot service provider. The registration engine 118 may further determine an amount of resources of a device assigned to act as a hotspot service provider to be allocated to hotspot service consumers. This determination may be made based on negotiation between the registration engine 118 and a device 110a chosen as the hotspot service provider. In one embodiment, the first device 110a reports an amount of available resources allocable for hotspot service provision to the hotspot manager 104. Alternatively or in addition, the registration engine 118 may independently place a limit on resources that can be used by a device assigned to be a hotspot service consumer. This limit may be based on a number of devices seeking hotspot access. Thus, for example, if a first subscriber pays for a high level of resources such as minutes or data volume, and only uses a fraction of the resources paid for, some of the unused resources of the first subscriber may be allocated to the provision of hotspot services to the second subscriber. In one example the hotspot manager 104 may select an Internet service provider (ISP) from a plurality of vendors. Alternatively, the second device 110b acting a hotspot service consumer may select an ISP and report this selection to the hotspot manager 104 via the first device 110a acting as the hotspot service provider.

The resource usage calculator 120 monitors and/or calculates resource usage of the resources of a hotspot service provider by a hotspot service consumer. For example, an amount of resources used by the hotspot resource consumer may be reported to the hotspot manager 104. The amount of resource usage may be an amount of data transferred to or from a hotspot service consumer, or an amount of time of access to a service obtained by the hotspot service consumer. The amount of resource usage may be transmitted to the hotspot service consumer which may display the amount in currency or resources used. The amount of resource usage may be computed and stored in either of the hotspot manager or the hotspot service provider and may be displayed at either device or at both devices. For example, the first subscriber, acting as the hotspot service provider may monitor the amount of its resources being used by the second subscriber, acting as the hotspot service consumer. The monitored resources may be communicated to the hotspot service manager. The hotspot service manager may compute a price for the amount of resource used and communicate the price to the second subscriber device via the first subscriber device.

The account adjustor 122 is operable to charge an account of a hotspot service consumer and to credit an account of a hotspot service provider. Thus, the account adjustor may charge a first amount from a first account of a second subscriber, where the amount is based on resource usage of a first set of resources of a first subscriber by the second subscriber, and credit at least a portion of the amount to a second account of the first subscriber. The amount to be charged may be predetermined according to terms of an agreement between the first subscriber and the hotspot manager, the first subscriber and the Internet service provider, the first subscriber and the second subscriber, the second subscriber and the hotspot manager, or the second subscriber and the Internet service provider.

The processor 114 may further give notice to the second subscriber when an amount of accessible resources of the first subscriber is at or near exhaustion. Also, the hotspot manager may automatically switch from designating the first device as a hotspot service provider to designating the fourth device as a hotspot service provider when the resources of the first device are near exhaustion or fall below a threshold. Further, the amount of resources allocated to the second subscriber may be based on a number of devices seeking access to a service. For example, fewer resources may be allocated to any one particular subscriber when the demand for resources by other subscribers is high.

One embodiment is a first device, such as the device 110a, that is configurable to provide a hotspot service. The first device includes a memory, a processor and a wired or wireless communication module, e.g., wired or wireless communication hardware, software and antenna. The memory may be configured to store or record an amount of resources allocable to a second device. The processor may be configured to authorize the second device to receive access to a first server via the first device. The authorizing may be based on information received from one of the first server and a second server. For example, the first server may be a hotspot manager 104 and the second server may be an Internet service provider 102. The device 110a may also include components such as a display unit, input devices, and the like. It is contemplated that the memory may include non-volatile memory such as a hard drive, flash memory, etc. in addition to volatile memory.

In one embodiment, when the second device seeks access via the first device, the first device will send a logon screen to the second device. The user of the second device may logon to the first device by inputting identification information such as a user name and password. The first device may forward the identification information from the second device to the hotspot manager 104 which authenticates the second device based on the identification information. The hotspot manager may then send authorization to the first device to enable Internet access to the second device via the first device.

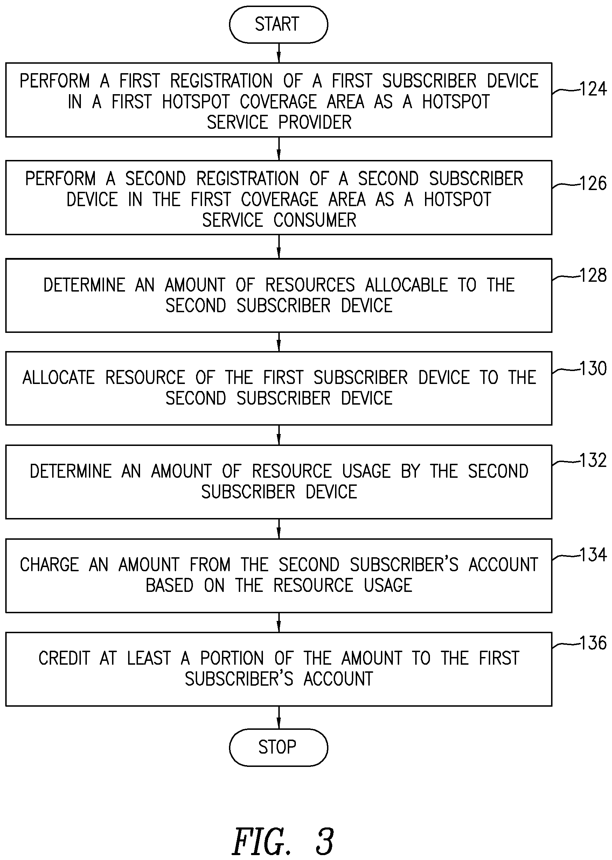

FIG. 3 is a flowchart of an exemplary process for using a subscriber device as a hotspot service provider in accordance with principles of the present invention. A first registration of a first subscriber device in a first hotspot coverage area as a hotspot service provider is performed (step 124). A second registration of a second subscriber device in the first hotspot coverage area as a hotspot service consumer is performed (step 126). An amount of resources allocable to the second subscriber device is determined (step 128). Resources of the first subscriber device are allocated to the second subscriber device (step 130). An amount of resource usage by the second subscriber device is determined (step 132). An amount is charged from the second subscriber's account based on the determined resource usage (step 134). At least a portion of the amount is credited to the first subscriber's account (step 136).

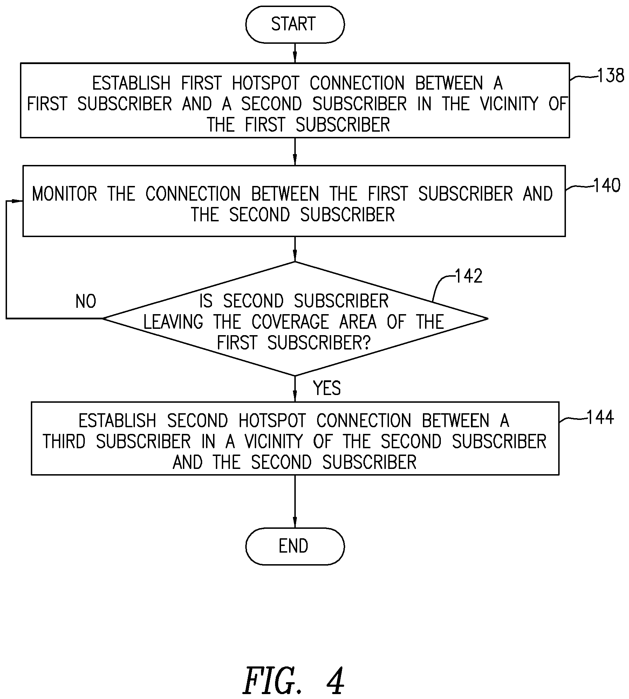

FIG. 4 is a flowchart of an exemplary process for transferring hotspot functionality from a first subscriber in first coverage area to a third subscriber in a second coverage area. A first hotspot connection is established between a first subscriber in the first coverage area and a second subscriber in the first coverage area (step 138). The connection between the first subscriber and the second subscriber is monitored (step 140). A determination is made as to whether the second subscriber is leaving the first coverage area (step 142). If not, then the monitoring of step 140 continues. If the second subscriber is leaving the first coverage area, then a second wireless hotspot connection is established between the second subscriber and a third subscriber in a second coverage area, the third subscriber functioning as a hotspot service provider for the second coverage area (step 144).

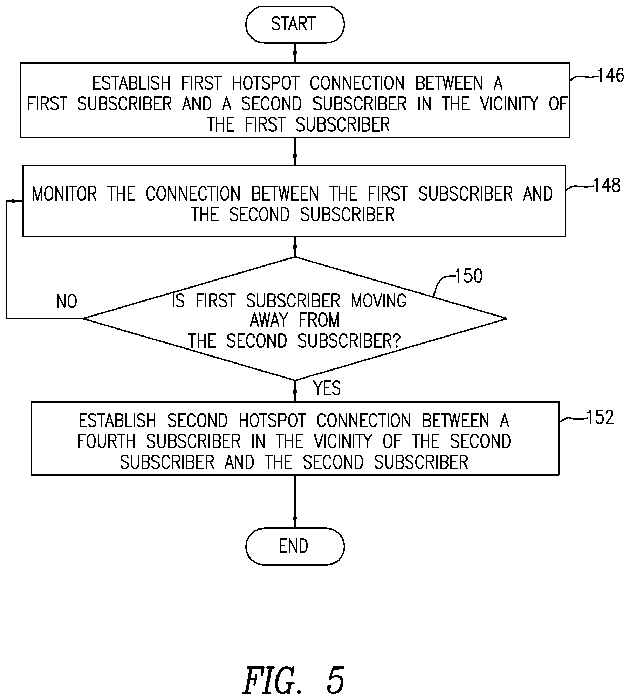

FIG. 5 is a flowchart of an exemplary process for transferring hotspot functionality from a first subscriber in a first coverage area to a fourth subscriber whose coverage area partially or substantially overlaps the first coverage area and encompasses the location of the second subscriber. A first hotspot connection is established between a first subscriber in the first coverage area and a second subscriber in the first coverage area (step 146). The connection between the first subscriber and the second subscriber is monitored (step 148). A determination is made as to whether the first subscriber is moving away from the second subscriber (step 150), so that the coverage area of the first subscriber no longer encompasses the second subscriber's location. If not, then the monitoring of step 148 continues. If the first subscriber is moving away from the second subscriber, then a second hotspot connection is established between the second subscriber and a fourth subscriber having a coverage area that encompasses the second subscriber's location, the fourth subscriber functioning as a hotspot service provider for the second subscriber (step 152).

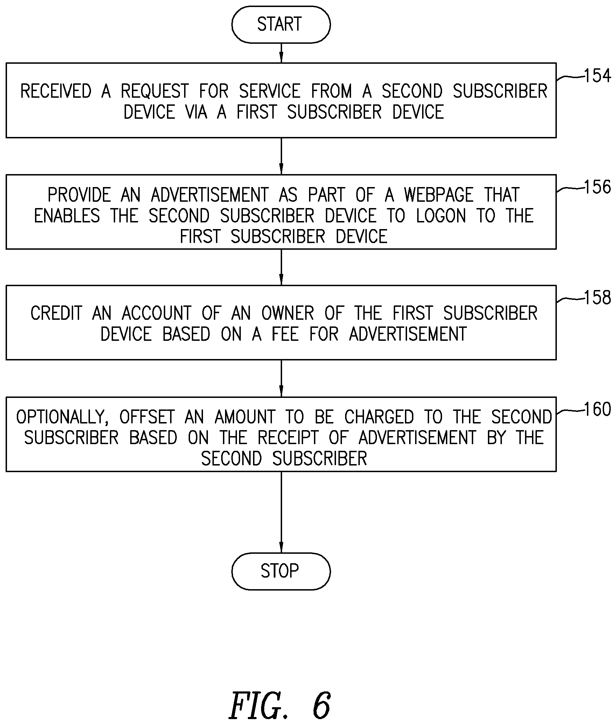

FIG. 6 is a flowchart of an exemplary process for providing advertising from a wireless hotspot manager to a subscriber. A request from a second subscriber device is received for service from a first subscriber device (step 154). An advertisement is sent to the second subscriber device via the first subscriber device. The advertisement may be part of a web page that is sent to the second subscriber device to enable the second subscriber device to logon for the service (step 156). An account of the first subscriber may be credited based on a fee paid by the sponsor of the advertisement (step 158). Optionally, an amount charged to the second subscriber may be discounted or offset by an amount based on the receipt of advertisements by the second subscriber (step 160). Thus, in one example, the second subscriber may be charged a fee for advertisement-free service. In an alternative example, the second subscriber may be provided advertisement-laden access without charge.

The present invention can be realized in hardware, or a combination of hardware and software. Any kind of computing system, or other apparatus adapted for carrying out the methods described herein, is suited to perform the functions described herein. A typical combination of hardware and software could be a specialized computer system, having one or more processing elements and a computer program stored on a storage medium that, when loaded and executed, controls the computer system such that it carries out the methods described herein. The present invention can also be embedded in a computer program product, which comprises all the features enabling the implementation of the methods described herein, and which, when loaded in a computing system is able to carry out these methods. Storage medium refers to any volatile or non-volatile storage device.
Computer program or application in the present context means any expression, in any language, code or notation, of a set of instructions intended to cause a system having an information processing capability to perform a particular function either directly or after either or both of the following a) conversion to another language, code or notation; b) reproduction in a different material form.

It will be appreciated by persons skilled in the art that the present invention is not limited to what has been particularly shown and described herein above. In addition, unless mention was made above to the contrary, it should be noted that all of the accompanying drawings are not to scale. A variety of modifications and variations are possible in light of the above teachings.

## Claims

1. A method for using a first mobile subscriber device (110a) as a hotspot service provider, the method comprising a hotspot management computing device performing the actions of:
performing a first registration of the first mobile subscriber device (110a) as a first hotspot service provider, the first registration including identifying an account of an owner of the first mobile subscriber device (110a);
allocating an amount of resources of the first mobile subscriber device (110a) to provide a hotspot service to other mobile subscriber devices and reserve a portion of the resources of the first mobile subscriber device (110a) for use by the first mobile subscriber device (110a);
performing a second registration of a second mobile subscriber device (110b) in a coverage area (108a) of the first mobile subscriber device (110a) as a hotspot service consumer, the second registration including identifying an account of an owner of the second mobile subscriber device (110b);
charging a first amount against an account of the owner of the second mobile subscriber device (110b), the first amount based on a resource usage of the allocated amount of resources by the second mobile subscriber device (110b) via the first device (110a); and
crediting at least a portion of the first amount to the account of the owner of the first mobile subscriber device (110a).

2. The method of claim 1, further comprising transmitting to the second mobile subscriber device (110b) via the first mobile subscriber device (110a) a webpage to enable a user of the second mobile subscriber device (110b) to log on to access a provided service.

3. The method of any one of the claims 1 or 2, wherein the first amount based on the resource usage is at least one of:
a fee based on an amount of data transferred to the second mobile subscriber device (110b) via the first device (110a), and
a fee based on an amount of time of access to a provided service by the second mobile subscriber device (110b) via the first mobile subscriber device (110a).

4. The method of any one of the claims 1 to 3, further comprising:
performing a third registration of a third mobile subscriber device (110d) as a second hotspot service provider, the third registration identifying an account of an owner of the third mobile subscriber device (110d);
allocating an amount of resources of the third mobile subscriber device (110d) to provide a hotspot service to other mobile subscriber devices and reserve a portion of the resources of the third mobile subscriber device (110d) for use by the third mobile subscriber device (110d); and
when the second mobile subscriber device (110b) exits the coverage area (108a) of the first mobile subscriber device (110a) and enters a coverage area (108b) of the third mobile subscriber device (110d), then:
ceasing crediting the account of the owner of the first mobile subscriber device (110a); and
commencing crediting at least a portion of the first amount to the account of the owner of the third mobile subscriber device (110d),
wherein, optionally, the method comprises signaling the third mobile subscriber device (110d) to act as a wireless hotspot service provider to the second mobile subscriber device (110b).

5. The method of any one of the claims 1 to 4, wherein the first registration of the first mobile subscriber device (110a) includes identifying an amount of resources to be provided to a hotspot service consumer by the first mobile subscriber device (110a).

6. A hotspot management computing device, comprising:
a memory (112), the memory (112) configured to store first account information of a first mobile subscriber and second account information of a second mobile subscriber, the first mobile subscriber associated with a first mobile subscriber device (110a) arranged to function as a hotspot service provider, and the second mobile subscriber associated with a second mobile subscriber device (110b) arranged to function as a hotspot service consumer; and
a processor (114), the processor (114) configured to:
perform registration of the first mobile subscriber and the second mobile subscriber;
allocate an amount of resources of the first mobile subscriber to provide a hotspot service to other mobile subscribers and reserve a portion of the resources of the first mobile subscriber device (110a) for use by the first mobile subscriber device (110a);
charge a first amount from the second account of the second mobile subscriber, the first amount based on resource usage of the allocated amount of resources by the second mobile subscriber; and
credit at least a portion of the first amount to the first account of the first mobile subscriber.

7. The hotspot management computing device of claim 6, wherein the first amount is based on resource usage of a first set of resources and wherein the processor (114) is further configured to monitor usage of the first set of resources and to calculate the first amount.

8. The hotspot management computing device of any one of the claims 6 or 7, wherein the processor (114) is further configured to select the first mobile subscriber from a plurality of mobile subscribers in a coverage area of the second mobile subscriber device.

9. The hotspot management computing device of any one of the claims 6 to 8, wherein, when the second mobile subscriber moves from a first cell (108a) to a second cell (108b), the processor (114):
ceases crediting the first account of the first mobile subscriber; and
commences crediting at least a portion of the first amount to a third account of a third mobile subscriber having a third mobile subscriber device (110d) arranged to function as a hotspot service provider in the second cell (108b).

10. The hotspot management computing device of any one of the claims 6 to 9, wherein the processor (114) is further configured to determine an amount of data transferred to the second mobile subscriber device (110b) via the first mobile subscriber device (110a).

11. The hotspot management computing device of any one of the claims 6 to 10, wherein the processor (114) is at least one of:
further configured to determine an amount of resources to be accessible by the second mobile subscriber device (110b) via the first mobile subscriber device (110a), wherein, optionally, the processor (114) is further configured to provide notice to the first mobile subscriber when the amount of accessible resources of the first mobile subscriber device (110a) is exhausted by the second mobile subscriber device (110b); and
further configured to determine an amount of resources of the first mobile subscriber device (110a) allocable to other mobile subscriber devices based on a number of devices seeking access to a service.

12. The hotspot management computing device of any one of the claims 6 to 11, wherein the processor (114) is further configured to deliver an advertisement to the second mobile subscriber device (110b) via the first mobile subscriber device (110a), wherein, optionally, the processor (114) is at least one of:
further configured to credit an amount to the first account of the first mobile subscriber based on a fee collected from a sponsor of the advertisement; and
further configured to offset the first amount based on a fee for delivery of the advertisement to the second mobile subscriber device (110b).

13. A first mobile subscriber device (110a) configurable to provide a hotspot service, the first mobile subscriber device (110a) comprising:
a memory, the memory configured to record an amount of resources of the first mobile subscriber device (110a) allocated to provision of a hotspot service; and
a processor, the processor configured to:
authorize a second mobile subscriber device (110b) to receive access to a provided service via the first mobile subscriber device (110a), the authorizing based on information received from a management computing device (104); and
receive an allocation of an amount of resources of the first mobile subscriber device (110a) to be used to provide a hotspot service to the second mobile subscriber device (110b) and an allocation of resources of the first mobile subscriber device (110a) for use by the first mobile subscriber device (110a).

14. The first mobile subscriber device (110a) of claim 13, wherein the memory records an amount of resources allocable to the second mobile subscriber device (110b), the first mobile subscriber device (110a) further comprising a display, the display arranged to indicate the amount of resources allocable to the second mobile subscriber device (110b).

15. The first mobile subscriber device (110a) of any one of the claims 13 or 14, wherein the processor is further configured to determine an amount of resources of the first mobile subscriber device (110a) being used by the second mobile subscriber device (110b), wherein, optionally, the amount of resources is expressed as one of a number of bits per second and a data volume, the first mobile subscriber device (110a) further comprising a display, the display arranged to indicate the amount of resources of the first mobile subscriber device (110a) being used by the second mobile subscriber device (110b).

## Patentansprüche

1. Verfahren zur Verwendung eines ersten mobilen Teilnehmergeräts (110a) als einen Hotspotdienstanbieter, das Verfahren umfassend das Ausführen der folgenden Handlungen durch ein Hotspotverwaltungscomputergerät:
Durchführen einer ersten Registrierung des ersten mobilen Teilnehmergeräts (110a) als einen ersten Hotspotdienstanbieter, wobei die erste Registrierung das Identifizieren eines Kontos eines Besitzers des ersten mobilen Teilnehmergeräts (110a) umfasst;
Zuweisen einer Menge an Ressourcen des ersten mobilen Teilnehmergerätes (110a), um einen Hotspotdienst für andere mobile Teilnehmergeräte zu erbringen, und Reservieren eines Teils der Ressourcen des ersten mobilen Teilnehmergerätes (110a) zur Verwendung durch das erste mobile Teilnehmergerät (110a);
Durchführen einer zweiten Registrierung eines zweiten mobilen Teilnehmergeräts (110b) in einem Versorgungsgebiet (108a) des ersten mobilen Teilnehmergeräts (110a) als einen Hotspotdienstkunden, wobei die zweite Registrierung das Identifizieren eines Kontos eines Besitzers des zweiten mobilen Teilnehmergeräts (110b) umfasst;
Abbuchen eines ersten Betrags von einem Konto des Benutzers des zweiten mobilen Teilnehmergeräts (110b), wobei der erste Betrag auf einer Ressourcennutzung der bereitgestellten Menge an Ressourcen durch das zweite mobile Teilnehmergerät (110b) über das erste mobile Teilnehmergerät (110a) basiert; und
Gutschreiben zumindest eines Teils des ersten Betrags dem Konto des Besitzers des ersten mobilen Teilnehmergeräts (110a).

2. Verfahren nach Anspruch 1, ferner umfassend das Übertragen einer Webseite an das zweite mobile Teilnehmergerät (110b) über das erste mobile Teilnehmergerät (110a), um es einem Benutzer des zweiten mobilen Teilnehmergeräts (110b) zu ermöglichen, sich anzumelden, um auf einen angebotenen Dienst zuzugreifen.

3. Verfahren nach einem der Ansprüche 1 oder 2, wobei der auf der Ressourcennutzung basierende erste Betrag zumindest eines der folgenden ist:
eine auf einer an das zweite mobile Teilnehmergerät (110b) über das erste mobile Teilnehmergerät (110a) übertragenen Datenmenge basierende Gebühr und
eine auf einer Zugriffszeit auf einen angebotenen Dienst durch das zweite mobile Teilnehmergerät (110b) über das erste mobile Teilnehmergerät (110a) basierende Gebühr.

4. Verfahren nach einem der Ansprüche 1 bis 3, ferner umfassend:
Durchführen einer dritten Registrierung eines dritten mobilen Teilnehmergeräts (110d) als einen zweiten Hotspotdienstanbieter, wobei die dritte Registrierung das Identifizieren eines Kontos eines Besitzers des dritten mobilen Teilnehmergeräts (110d) umfasst;
Zuweisen einer Menge an Ressourcen des dritten mobilen Teilnehmergerätes (110d), um einen Hotspotdienst für andere mobile Teilnehmergeräte zu erbringen, und Reservieren eines Teils der Ressourcen des dritten mobilen Teilnehmergerätes (110d) für die Verwendung durch das dritte mobile Teilnehmergerät (110d); und
wenn das zweite mobile Teilnehmergerät (110b) das Versorgungsgebiet (108a) des ersten mobilen Teilnehmergeräts (110a) verlässt und in das Versorgungsgebiet (108b) des dritten mobilen Teilnehmergeräts (110d) eintritt, dann:
Aufhören, dem Kontos des Besitzers des ersten mobilen Teilnehmergeräts (110a) gutzuschreiben; und
Beginnen, zumindest einen Teil des ersten Betrags dem Konto des Besitzers des dritten mobilen Teilnehmergeräts (110d) gutzuschreiben,
wobei das Verfahren optional das Signalisieren an das dritte mobile Teilnehmergerät (110d), als drahtloser Hotspotdienstanbieter für das zweite mobile Teilnehmergerät (110b) zu agieren, umfasst.

5. Verfahren nach einem der Ansprüche 1 bis 4, wobei die erste Registrierung des ersten mobilen Teilnehmergeräts (110a) das Identifizieren einer Menge an Ressourcen, die einem Hotspotdienstkunden durch das erste mobile Teilnehmergerät (110a) bereitgestellt werden sollen, umfasst.

6. Hotspotverwaltungscomputergerät umfassend:
einen Speicher (112), wobei der Speicher (112) eingerichtet ist, erste Kontoinformation eines ersten Mobilteilnehmers und zweite Kontoinformation eines zweiten Mobilteilnehmers zu speichern, wobei der erste Mobilteilnehmer mit einem ersten mobilen Teilnehmergerät (110a) assoziiert ist, das eingerichtet ist, als Hotspotdienstanbieter zu fungieren, und der zweite Mobilteilnehmer mit einem zweiten mobilen Teilnehmergerät (110b) assoziiert ist, das eingerichtet ist, als Hotspotdienstkunde zu fungieren; und
einen Prozessor (114), wobei der Prozessor (114) eingerichtet ist:
eine Registrierung des ersten Mobilteilnehmers und des zweiten Mobilteilnehmers durchzuführen;
eine Menge an Ressourcen des ersten Mobilteilnehmers zuzuweisen, um einen Hotspotdienst für andere Mobilteilnehmer zu erbringen, und einen Teil der Ressourcen des ersten mobilen Teilnehmergerätes (110a) für die Verwendung durch das erste mobile Teilnehmergerät (110a) zu reservieren;
einen ersten Betrag von dem zweiten Konto des Benutzers des zweiten Mobilteilnehmers abzubuchen, wobei der erste Betrag auf einer Ressourcennutzung der bereitgestellten Menge an Ressourcen durch den zweiten Mobilteilnehmer basiert; und
zumindest einen Teil des ersten Betrags dem ersten Konto des ersten Mobilteilnehmers gutzuschreiben.

7. Hotspotverwaltungscomputergerät nach Anspruch 6, wobei der erste Betrag auf einer Ressourcennutzung eines ersten Satzes von Ressourcen basiert und wobei der Prozessor (114) ferner eingerichtet ist, eine Nutzung des ersten Satzes von Ressourcen zu überwachen und den ersten Betrag zu berechnen.

8. Hotspotverwaltungscomputergerät nach einem der Ansprüche 6 oder 7, wobei der Prozessor (114) ferner eingerichtet ist, den ersten Mobilteilnehmer aus einer Mehrzahl von Mobilteilnehmern in einem Versorgungsgebiet des zweiten mobilen Teilnehmergeräts auszuwählen.

9. Hotspotverwaltungscomputergerät nach einem der Ansprüche 6 bis 8, wobei, wenn sich der zweite Mobilteilnehmer von einer ersten Zelle (108a) zu einer zweiten Zelle (108b) bewegt, der Prozessor (114):
aufhört, dem Kontos des Besitzers des ersten Mobilteilnehmers gutzuschreiben; und
beginnt, zumindest einen Teil des ersten Betrags einem dritten Konto eines dritten Mobilteilnehmers, der ein drittes mobiles Teilnehmergerät (110d), das eingerichtet ist, in der zweiten Zelle (108b) als Hotspotdienstanbieter zu fungieren, hat, gutzuschreiben.

10. Hotspotverwaltungscomputergerät nach einem der Ansprüche 6 bis 9, wobei der Prozessor (114) ferner eingerichtet ist, eine an das zweite mobile Teilnehmergerät (110b) über das erste mobile Teilnehmergerät (110a) übertragene Datenmenge zu bestimmen.

11. Hotspotverwaltungscomputergerät nach einem der Ansprüche 6 bis 10, wobei der Prozessor (114) zumindest ein des folgenden ist:
ferner eingerichtet ist, eine Menge an Ressourcen, die für das zweite mobile Teilnehmergerät (110b) über das erste mobile Teilnehmergerät (110a) zugänglich sein soll, zu bestimmen, wobei optional der Prozessor (114) ferner eingerichtet ist,
den ersten Mobilteilnehmer darauf hinzuweisen, wenn die Menge an zugänglichen Ressourcen des ersten mobilen Teilnehmergeräts (110a) durch das zweite mobile Teilnehmergerät (110b) erschöpft ist; und
ferner eingerichtet ist, eine Menge an Ressourcen des ersten mobilen Teilnehmergeräts (110a), die für andere mobile Teilnehmergeräte bereitstellbar ist, basierend auf einer Anzahl von Geräten, die Zugriff auf einen Dienst begehren, zu bestimmen.

12. Hotspotverwaltungscomputergerät nach einem der Ansprüche 6 bis 11, wobei der Prozessor (114) ferner eingerichtet ist, eine Anzeige an das zweite mobile Teilnehmergerät (110b) über das erste mobile Teilnehmergerät (110a) zu liefern, wobei optional der Prozessor (114) zumindest eins des folgenden ist:
ferner eingerichtet, einen Betrag dem ersten Konto des ersten Mobilteilnehmers basierend auf einer von einem Sponsor der Anzeige vereinnahmten Gebühr gutzuschreiben; und
ferner eingerichtet, den ersten Betrag basierend auf einer Gebühr für die Lieferung der Anzeige an das zweite mobile Teilnehmergerät (110b) anzupassen.

13. Erstes mobiles Teilnehmergerät (110a), das konfigurierbar ist, einen Hotspotdienst zu erbringen, das erste mobile Teilnehmergerät (110a) umfassend:
einen Speicher, wobei der Speicher eingerichtet ist, eine Menge an Ressourcen des ersten mobilen Teilnehmergeräts (110a), die für die Erbringung eines Hotspotdienstes bereitgestellt ist, zu speichern; und
einen Prozessor, wobei der Prozessor eingerichtet ist:
ein zweites mobiles Teilnehmergerät (110b) zu autorisieren, Zugriff auf einen angebotenen Service über das erste mobile Teilnehmergerät (110a) zu erhalten, wobei die Autorisierung auf von einem Verwaltungscomputergerät (104) erhaltener Information basiert; und
eine Zuweisung einer Menge an Ressourcen des ersten mobilen Teilnehmergeräts (110a), die zu verwenden ist, um einen Hotspotdienst für das zweite mobile Teilnehmergerät (110b) zu erbringen, und eine Zuweisung von Ressourcen des ersten mobilen Teilnehmergeräts (110a) für die Verwendung durch das erste mobile Teilnehmergerät (110a) zu empfangen.

14. Erstes mobiles Teilnehmergerät (110a) nach Anspruch 13, wobei der Speicher eine Menge an Ressourcen, die für das zweite mobile Teilnehmergerät (110b) bereitstellbar ist, speichert, wobei das erste mobile Teilnehmergerät (110a) ferner eine Anzeige umfasst, wobei die Anzeige eingerichtet ist, die für das zweite mobile Teilnehmergerät (110b) bereitstellbare Menge an Ressourcen anzuzeigen.

15. Erstes mobiles Teilnehmergerät (110a) nach einem der Ansprüche 13 oder 14, wobei der Prozessor ferner eingerichtet ist, eine von dem zweiten mobilen Teilnehmergerät (110b) verwendete Menge an Ressourcen des ersten mobilen Teilnehmergeräts (110a) zu bestimmen, wobei optional die Menge an Ressourcen als eines von einer Anzahl an Bits pro Sekunde und einem Datenvolumen ausgedrückt ist, wobei das erste mobile Teilnehmergerät (110a) ferner eine Anzeige umfasst, wobei die Anzeige eingerichtet ist, die von dem zweiten mobilen Teilnehmergerät (110b) verwendete Menge an Ressourcen des ersten mobilen Teilnehmergeräts (110a) anzuzeigen.

## Revendications

1. Procédé d'utilisation d'un premier dispositif d'abonné mobile (110a) en tant que fournisseur de services de point d'accès, le procédé comprenant un dispositif informatique de gestion de point d'accès effectuant les actions de :
l'exécution d'un premier enregistrement du premier dispositif d'abonné mobile (110a) en tant que premier fournisseur de services de point d'accès, le premier enregistrement comprenant l'identification d'un compte d'un propriétaire du premier dispositif d'abonné mobile (110a) ;
l'allocation d'une quantité de ressources du premier dispositif d'abonné mobile (110a) pour fournir un service de point d'accès à d'autres dispositifs d'abonnés mobiles et pour réserver une portion des ressources du premier dispositif d'abonné mobile (110a) pour une utilisation par le premier dispositif d'abonné mobile (110a) ;
l'exécution d'un deuxième enregistrement d'un deuxième dispositif d'abonné mobile (110b) dans une zone de couverture (108a) du premier dispositif d'abonné mobile (110a) en tant que consommateur de services de point d'accès, le deuxième enregistrement comprenant l'identification d'un compte d'un propriétaire du deuxième dispositif d'abonné mobile (110b) ;
le débit d'un premier montant sur un compte du propriétaire du deuxième dispositif d'abonné mobile (110b), le premier montant étant basé sur une utilisation de ressources de la quantité allouée de ressources par le deuxième dispositif d'abonné mobile (110b) par l'intermédiaire du premier dispositif (110a) ; et
le crédit d'au moins une portion du premier montant sur le compte du propriétaire du premier dispositif d'abonné mobile (110a).

2. Procédé selon la revendication 1, comprenant en outre la transmission, au deuxième dispositif d'abonné mobile (110b) par l'intermédiaire du premier dispositif d'abonné mobile (110a), d'une page Web pour permettre à un utilisateur du deuxième dispositif d'abonné mobile (110b) de se connecter pour accéder à un service fourni.

3. Procédé selon l'une quelconque des revendications 1 et 2, dans lequel le premier montant basé sur l'utilisation de ressources est au moins l'un de :
un honoraire basé sur une quantité de données transférées au deuxième dispositif d'abonné mobile (110b) par l'intermédiaire du premier dispositif (110a), et
un honoraire basé sur une quantité de temps d'accès à un service fourni par le deuxième dispositif d'abonné mobile (110b) par l'intermédiaire du premier dispositif d'abonné mobile (110a).

4. Procédé selon l'une quelconque des revendications 1 à 3, comprenant en outre :
l'exécution d'un troisième enregistrement d'un troisième dispositif d'abonné mobile (110d) en tant que deuxième fournisseur de services de point d'accès, le troisième enregistrement identifiant un compte d'un propriétaire du troisième dispositif d'abonné mobile (110d) ;
l'allocation d'une quantité de ressources du troisième dispositif d'abonné mobile (110d) pour fournir un service de point d'accès à d'autres dispositifs d'abonnés mobiles et pour réserver une portion des ressources du troisième dispositif d'abonné mobile (110d) pour une utilisation par le troisième dispositif d'abonné mobile (110d) ; et
lorsque le deuxième dispositif d'abonné mobile (110b) quitte la zone de couverture (108a) du premier dispositif d'abonné mobile (110a) et entre dans une zone de couverture (108b) du troisième dispositif d'abonné mobile (110d), alors :
la cessation du crédit du compte du propriétaire du premier dispositif d'abonné mobile (110a) ; et
le commencement du crédit d'au moins une portion du premier montant sur le compte du propriétaire du troisième dispositif d'abonné mobile (110d),
dans lequel, facultativement, le procédé comprend la signalisation du troisième dispositif d'abonné mobile (110d) pour agir en tant que fournisseur de services de point d'accès sans fil au deuxième dispositif d'abonné mobile (110b).

5. Procédé selon l'une quelconque des revendications 1 à 4, dans lequel le premier enregistrement du premier dispositif d'abonné mobile (110a) comprend l'identification d'une quantité de ressources à fournir à un consommateur de services de point d'accès par le premier dispositif d'abonné mobile (110a).

6. Dispositif informatique de gestion de point d'accès, comprenant :
une mémoire (112), la mémoire (112) étant configurée pour mémoriser des premières informations de compte d'un premier abonné mobile et des deuxièmes informations de compte d'un deuxième abonné mobile, le premier abonné mobile étant associé à un premier dispositif d'abonné mobile (110a) agencé pour fonctionner en tant que fournisseur de services de point d'accès, et le deuxième abonné mobile étant associé à un deuxième dispositif d'abonné mobile (110b) agencé pour fonctionner en tant que consommateur de services de point d'accès ; et
un processeur (114), le processeur (114) étant configuré pour effectuer :
l'exécution d'un enregistrement du premier abonné mobile et du deuxième abonné mobile ;
l'allocation d'une quantité de ressources du premier abonné mobile pour fournir un service de point d'accès à d'autres abonnés mobiles et pour réserver une portion des ressources du premier dispositif d'abonné mobile (110a) pour une utilisation par le premier dispositif d'abonné mobile (110a) ;
le débit d'un premier montant du deuxième compte du deuxième abonné mobile, le premier montant étant basé sur une utilisation de ressources de la quantité allouée de ressources par le deuxième abonné mobile ; et
le crédit d'au moins une portion du premier montant sur le premier compte du premier abonné mobile.

7. Dispositif informatique de gestion de point d'accès selon la revendication 6, dans lequel le premier montant est basé sur une utilisation de ressources d'un premier ensemble de ressources et dans lequel le processeur (114) est en outre configuré pour surveiller une utilisation du premier ensemble de ressources et pour calculer le premier montant.

8. Dispositif informatique de gestion de point d'accès selon l'une quelconque des revendications 6 et 7, dans lequel le processeur (114) est en outre configuré pour sélectionner le premier abonné mobile parmi une pluralité d'abonnés mobiles dans une zone de couverture du deuxième dispositif d'abonné mobile.

9. Dispositif informatique de gestion de point d'accès selon l'une quelconque des revendications 6 à 8, dans lequel, lorsque le deuxième abonné mobile se déplace d'une première cellule (108a) à une deuxième cellule (108b), le processeur (114) :
cesse de créditer le premier compte du premier abonné mobile ; et
commence à créditer au moins une portion du premier montant sur un troisième compte d'un troisième abonné mobile ayant un troisième dispositif d'abonné mobile (110d) agencé pour fonctionner en tant que fournisseur de services de point d'accès dans la deuxième cellule (108b).

10. Dispositif informatique de gestion de point d'accès selon l'une quelconque des revendications 6 à 9, dans lequel le processeur (114) est en outre configuré pour déterminer une quantité de données transférées au deuxième dispositif d'abonné mobile (110b) par l'intermédiaire du premier dispositif d'abonné mobile (110a).

11. Dispositif informatique de gestion de point d'accès selon l'une quelconque des revendications 6 à 10, dans lequel le processeur (114) est au moins l'un de :
configuré en outre pour déterminer une quantité de ressources devant être accessibles par le deuxième dispositif d'abonné mobile (110b) par l'intermédiaire du premier dispositif d'abonné mobile (110a), dans lequel, facultativement, le processeur (114) est en outre configuré pour fournir une notification au premier abonné mobile quand la quantité de ressources accessibles du premier dispositif d'abonné mobile (110a) est épuisée par le deuxième dispositif d'abonné mobile (110b) ; et configuré en outre pour déterminer une quantité de ressources du premier dispositif d'abonné mobile (110a) pouvant être allouées à d'autres dispositifs d'abonnés mobiles sur la base d'un nombre de dispositifs cherchant l'accès à un service.

12. Dispositif informatique de gestion de point d'accès selon l'une quelconque des revendications 6 à 11, dans lequel le processeur (114) est en outre configuré pour délivrer une annonce au deuxième dispositif d'abonné mobile (110b) par l'intermédiaire du premier dispositif d'abonné mobile (110a), dans lequel, facultativement, le processeur (114) est au moins l'un de :
configuré en outre pour créditer un montant sur le premier compte du premier abonné mobile sur la base d'un honoraire collecté auprès d'un sponsor de l'annonce ; et
configuré en outre pour décaler le premier montant sur la base d'un honoraire pour une livraison de l'annonce au deuxième dispositif d'abonné mobile (110b).

13. Premier dispositif d'abonné mobile (110a) configurable pour fournir un service de point d'accès, le premier dispositif d'abonné mobile (110a) comprenant :
une mémoire, la mémoire étant configurée pour enregistrer une quantité de ressources du premier dispositif d'abonné mobile (110a) allouées à la fourniture d'un service de point d'accès ; et
un processeur, le processeur étant configuré pour effectuer :
l'autorisation à un deuxième dispositif d'abonné mobile (110b) de recevoir un accès à un service fourni par l'intermédiaire du premier dispositif d'abonné mobile (110a), l'autorisation étant basée sur des informations reçues en provenance d'un dispositif informatique de gestion (104) ; et
la réception d'une allocation d'une quantité de ressources du premier dispositif d'abonné mobile (110a) à utiliser pour fournir un service de point d'accès au deuxième dispositif d'abonné mobile (110b) et d'une allocation de ressources du premier dispositif d'abonné mobile (110a) pour une utilisation par le premier dispositif d'abonné mobile (110a).

14. Premier dispositif d'abonné mobile (110a) selon la revendication 13, dans lequel la mémoire enregistre une quantité de ressources pouvant être allouées au deuxième dispositif d'abonné mobile (110b), le premier dispositif d'abonné mobile (110a) comprenant en outre un affichage, l'affichage étant agencé pour indiquer la quantité de ressources pouvant être allouées au deuxième dispositif d'abonné mobile (110b).

15. Premier dispositif d'abonné mobile (110a) selon l'une quelconque des revendications 13 et 14, dans lequel le processeur est en outre configuré pour déterminer une quantité de ressources du premier dispositif d'abonné mobile (110a) étant utilisées par le deuxième dispositif d'abonné mobile (110b), dans lequel, facultativement, la quantité de ressources est exprimée en tant que l'un d'un nombre de bits par seconde et d'un volume de données, le premier dispositif d'abonné mobile (110a) comprenant en outre un affichage, l'affichage étant agencé pour indiquer la quantité de ressources du premier dispositif d'abonné mobile (110a) étant utilisées par le deuxième dispositif d'abonné mobile (110b).
